# FASCICULE DE BREVET EUROPEEN

(11) **EP 3 947 058 B1**
(45) Date de publication et mention de la délivrance du brevet: **13.12.2023**
(21) Numéro de dépôt: 20710565.1
(22) Date de dépôt: 18.03.2020
(51) Int. Cl.: B60S 1/48, B60S 1/56, F04D 15/00, G01M 3/26

(54) **SYSTÈME DE NETTOYAGE D'AU MOINS DEUX CAPTEURS/ÉMETTEURS D'UN VÉHICULE AUTOMOBILE**
SYSTEM ZUR REINIGUNG VON MINDESTENS ZWEI SENSOREN/SENDERN FÜR EIN KRAFTFAHRZEUG
SYSTEM FOR CLEANING AT LEAST TWO SENSORS/TRANSMITTERS FOR A MOTOR VEHICLE

(30) Priorité: 26.03.2019 FR 1903113
(43) Date de publication de la demande: 09.02.2022
(73) Titulaire: Valeo Systèmes d'Essuyage, 78322 Le Mesnil Saint Denis (FR)
(72) Inventeur: GIRAUD, Frédéric, 78322 LE MESNIL SAINT DENIS (FR); FILLOUX, Alexandre, 78322 LE MESNIL SAINT DENIS (FR)
(74) Mandataire: Valeo Visibility
(86) Numéro de dépôt international: PCT/EP2020/057528
(87) Numéro de publication internationale: WO 2020/193328

(56) Documents cités:
- WO-A1-2018/230255
- DE-A1-102017 206 469
- KR-A- 20160 003 518
- US-A1- 2018 290 632

## Description

La présente invention concerne le domaine du nettoyage de capteurs/émetteurs d'un véhicule automobile, et plus particulièrement, la présente invention concerne un système de nettoyage capable de détecter un problème tel qu'une fuite ou une obstruction sur les conduites agencées entre un réservoir de fluide de nettoyage et les capteurs/émetteurs à nettoyer.

Les véhicules automobiles actuels comprennent de plus en plus de systèmes d'aide à la conduite qui tendent à rendre le véhicule autonome dans des situations de plus en plus variées. De tels systèmes d'aide à la conduite comprennent notamment des capteurs et des émetteurs qui permettent au véhicule, ou au conducteur selon le degré d'autonomie du véhicule, d'acquérir des données sur l'environnement du véhicule afin de prendre des décisions de conduite.

Il est primordial que ces systèmes d'aide à la conduite soient sûrs et toujours opérationnels. Ainsi, les capteurs/émetteurs doivent être toujours propres afin que l'acquisition de données soit la meilleure possible.

Les véhicules comprennent ainsi de façon connue des systèmes de nettoyage de ces capteurs/émetteurs qui sont commandés de manière à assurer une fonction de nettoyage lorsque les capteurs/émetteurs ont un niveau de propreté insuffisant à leur bon fonctionnement. Ces systèmes de nettoyage comprennent notamment au moins un réservoir de fluide de nettoyage, au moins un dispositif de projection apte à projeter ce fluide de nettoyage sur les capteurs/émetteurs et au moins un circuit de distribution reliant le réservoir de fluide de nettoyage aux buses de projection.

Toutefois, ces systèmes de nettoyage ne sont pas totalement satisfaisants en ce qu'aucune information n'est recueillie quant à l'alimentation correcte des dispositifs de projection et notamment quant à l'état du circuit de distribution. Par exemple, ces systèmes de nettoyage ne permettent pas aujourd'hui de détecter une fuite ou une obstruction sur le circuit de distribution.

Le document WO 2018 230 255A1 décrit un système de nettoyage de véhicule et une méthode de nettoyage de véhicule.

La présente invention s'inscrit dans ce contexte et vise à remédier, au moins, au problème énoncé en proposant un système de nettoyage d'au moins deux capteurs/émetteurs d'un véhicule automobile, le système comprenant au moins un premier dispositif de projection d'un fluide de nettoyage sur au moins un premier capteur/émetteur, au moins un deuxième dispositif de projection d'un fluide de nettoyage sur au moins un deuxième capteur/émetteur, au moins un réservoir de stockage du fluide de nettoyage, au moins un circuit de distribution du fluide de nettoyage reliant le réservoir au premier et au deuxième dispositifs de projection du fluide de nettoyage, au moins une pompe électronisée et au moins une unité de contrôle. Selon l'invention, l'unité de contrôle est configurée pour recevoir une information de demande d'activation du premier et/ou du deuxième dispositifs de projection du fluide de nettoyage, pour déterminer une valeur théorique d'au moins un paramètre de fonctionnement de la pompe en fonction, d'une part, d'une longueur d'une portion du circuit de distribution s'étendant entre le réservoir et le premier et/ou le deuxième dispositifs de projection du fluide de nettoyage à activer, et d'autre part, d'une pression de fonctionnement souhaitée du premier et/ou du deuxième dispositif(s) de projection, pour comparer la valeur théorique du paramètre de fonctionnement de la pompe avec une valeur réelle du paramètre de fonctionnement de la pompe et pour déterminer un état de ladite portion du circuit de distribution du fluide de nettoyage en fonction du résultat de ladite comparaison.

Les termes « circuit de distribution », se réfèrent, dans la présente demande, aussi bien à un réseau hydraulique qui dessert chacun des dispositifs de projection branchés sur ce réseau, qu'à des tuyaux indépendants qui desservent chaque dispositif de projection indépendamment des autres. On comprend que le fait de prendre en compte la longueur de la portion de circuit de distribution concernée permet de prendre en compte les pertes de charge du fluide de nettoyage observées sur ladite portion du circuit, afin de déterminer le plus justement possible la valeur théorique du paramètre de fonctionnement de la pompe.

Selon une caractéristique de la présente invention, l'unité de contrôle est configurée pour déterminer une information de fuite sur la portion du circuit de distribution du fluide de nettoyage si la valeur réelle du paramètre de fonctionnement de la pompe est inférieure à la valeur théorique du paramètre de fonctionnement de la pompe et si l'écart entre la valeur réelle et la valeur théorique du paramètre de fonctionnement est supérieur ou égal à 5% de la valeur théorique du paramètre de fonctionnement de la pompe.

Selon une autre caractéristique de la présente invention, l'unité de contrôle est configurée pour déterminer une information d'obstruction de la portion du circuit de distribution du fluide de nettoyage si la valeur réelle du paramètre de fonctionnement de la pompe est supérieure à la valeur théorique du paramètre de fonctionnement de la pompe et si l'écart entre la valeur réelle et la valeur théorique du paramètre de fonctionnement est supérieur ou égal à 5% de la valeur théorique du paramètre de fonctionnement de la pompe.

Selon un exemple de réalisation de la présente invention, le paramètre de fonctionnement de la pompe est une vitesse de rotation de cette pompe ou une alimentation électrique de cette pompe. Par exemple, on vérifie que l'alimentation électrique réelle correspond à l'alimentation électrique normalement nécessaire pour atteindre la vitesse de rotation de la pompe espérée, cette vitesse de rotation de la pompe espérée étant déterminée en fonction de la longueur de la portion du circuit de distribution et de la pression de fonctionnement souhaitée du premier et/ou du deuxième dispositif(s) de projection.

Selon une caractéristique de l'invention, l'unité de contrôle et la pompe sont deux éléments distincts. Selon cette caractéristique de la présente invention, la pompe comprend au moins une unité de commande dans laquelle est enregistrée, au moins, une courbe de fonctionnement optimal de cette pompe. Cette unité de commande spécifique à la pompe comprend par ailleurs des moyens de communication avec l'unité de contrôle du système de nettoyage selon l'invention. L'unité de contrôle du système de nettoyage comprend les courbes de perte de charge des différentes portions de circuit s'étendant entre le réservoir et chacun des dispositifs de projection du fluide de nettoyage. Avantageusement, le fait que l'unité de commande de la pompe électronisée et l'unité de contrôle du système de nettoyage puissent communiquer permet de standardiser ces éléments, sans qu'il ne soit nécessaire de les programmer pour chaque nouvelle implantation sur un véhicule donné, c'est-à-dire sans qu'il ne soit nécessaire d'enregistrer manuellement les paramètres de fonctionnement de la pompe dans l'unité de contrôle du système de nettoyage, ni d'enregistrer manuellement les courbes de perte de charge des différentes portions du circuit de distribution dans l'unité de commande de la pompe.

L'invention concerne également un procédé de mise en oeuvre d'un système de nettoyage selon l'invention, comprenant une étape au cours de laquelle l'unité de contrôle reçoit une information concernant une demande de projection de fluide de nettoyage, à une pression donnée, par le premier et/ou le deuxième dispositifs de projection de fluide de nettoyage, une étape au cours de laquelle l'unité de contrôle sélectionne, parmi une pluralité de courbes de perte de charge, la courbe correspondant à la portion du circuit de distribution s'étendant entre le réservoir et le premier et/ou le deuxième dispositif de projection du fluide de nettoyage à activer et une étape au cours de laquelle l'unité de contrôle sélectionne une courbe de fonctionnement de la pompe qui permet l'obtention d'une pression déterminée, en fonction de la courbe de perte de charge précédemment sélectionnée.

Autrement dit, on comprend que la courbe de fonctionnement de la pompe est choisie en fonction de la longueur de la portion du circuit de distribution qui doit être alimentée, les pertes de charge le long d'un circuit étant directement liées à sa longueur, et de la pression souhaitée pour les premier et/ou deuxième dispositif(s) de projection. La courbe de fonctionnement de la pompe peut quant à elle par exemple être une courbe représentant la pression en fonction du débit du fluide de nettoyage pour une vitesse de rotation de la pompe donnée.

Selon l'invention, le procédé comprend également une étape au cours de laquelle l'unité de contrôle détermine une alimentation électrique théorique de la pompe correspondant à la courbe de fonctionnement sélectionnée, une étape au cours de laquelle l'unité de contrôle mesure l'alimentation électrique réellement fournie à la pompe pour atteindre la courbe de fonctionnement sélectionnée, une étape au cours de laquelle l'unité de contrôle compare l'alimentation électrique théorique de la pompe avec l'alimentation électrique réellement fournie à la pompe et une étape au cours de laquelle l'unité de contrôle détermine un état de la portion du circuit de distribution en fonction de la comparaison réalisée entre l'alimentation électrique théorique de la pompe et l'alimentation électrique réelle de cette pompe.

Selon une caractéristique de l'invention, le procédé comprend une étape au cours de laquelle l'unité de contrôle détermine une information de fuite sur la portion du circuit de distribution du fluide de nettoyage lorsqu'une valeur de l'alimentation électrique réelle de la pompe est inférieure à une valeur de l'alimentation électrique théorique de la pompe.

Selon une autre caractéristique de l'invention, le procédé comprend une étape au cours de laquelle l'unité de contrôle détermine une information d'obstruction du circuit de distribution de fluide de nettoyage lorsqu'une valeur de l'alimentation électrique réelle de la pompe est supérieure à une valeur de l'alimentation électrique théorique de la pompe.

Avantageusement, lorsque deux dispositifs de projection sont activés simultanément et que l'unité de contrôle détecte une fuite ou une obstruction sur la portion du circuit de distribution concernée, l'unité de contrôle peut être en outre configurée pour lancer une instruction d'activation du premier dispositif de projection et une instruction de fermeture du deuxième dispositif de projection et pour redémarrer le procédé qui vient d'être décrit. Ainsi, l'unité de contrôle peut affiner le résultat de sa première comparaison et donner une information sur un état d'une portion du circuit de distribution s'étendant entre le réservoir et le premier dispositif de projection et d'une autre portion du circuit de distribution s'étendant entre le premier dispositif de projection et le deuxième dispositif de projection.

L'invention concerne également un véhicule automobile qui comprend au moins un système de nettoyage selon l'invention et une pluralité de capteurs/émetteurs, dans lequel au moins un dispositif de projection de fluide de nettoyage est associé à chaque capteur/émetteur, un circuit de distribution du fluide de nettoyage relie le réservoir de fluide de nettoyage à l'ensemble des dispositifs de projection de ce fluide de nettoyage et dans lequel une longueur du circuit de distribution du fluide de nettoyage mesurée entre le réservoir de fluide de nettoyage et l'un quelconque des dispositifs de projection du fluide de nettoyage est différente d'une longueur du circuit de distribution du fluide de nettoyage mesurée entre le réservoir de fluide de nettoyage et un autre dispositif de projection du fluide de nettoyage.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig. 1] illustre, de façon schématique, un système de nettoyage d'au moins deux capteurs/émetteurs selon la présente invention ;
[Fig. 2] illustre un graphique sur lequel s'appuie une unité de contrôle du système de nettoyage selon l'invention pour optimiser le fonctionnement de ce système de nettoyage ;
[Fig. 3] illustre un autre graphique sur lequel s'appuie l'unité de contrôle du système de nettoyage selon l'invention pour détecter un état d'un circuit de distribution de ce système de nettoyage.

Les caractéristiques, variantes et les différentes formes de réalisation de l'invention peuvent être associées les unes avec les autres, selon diverses combinaisons, dans la mesure où elles ne sont pas incompatibles ou exclusives les unes aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique antérieur.

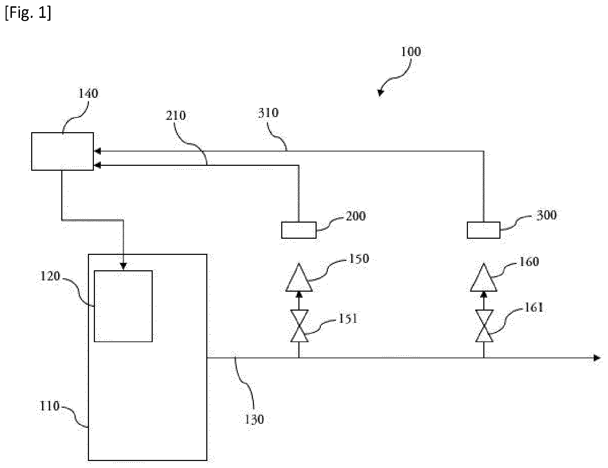

La figure 1 illustre schématiquement un système de nettoyage 100 d'au moins deux capteurs/émetteurs 200, 300 selon un exemple de réalisation de la présente invention. Tel que représenté, le système de nettoyage 100 comprend au moins un réservoir 110 de fluide de nettoyage, au moins une pompe 120 électronisée, au moins un circuit de distribution 130 du fluide de nettoyage, au moins une unité de contrôle 140, au moins un premier dispositif de projection 150 configuré pour projeter le fluide de nettoyage sur un premier capteur/émetteur 200 et au moins un deuxième dispositif de projection 160 configuré pour projeter du fluide de nettoyage sur un deuxième capteur/émetteur 300. Selon l'invention, le premier et le deuxième dispositifs de projection 150, 160 peuvent être identiques ou différents sans sortir du contexte de la présente invention.

Selon un premier exemple de réalisation de la présente invention, le circuit de distribution 130 du fluide de nettoyage est formé par un réseau hydraulique sur lequel sont branchés les dispositifs de projection 150, 160. Autrement dit, ce réseau hydraulique permet d'alimenter l'ensemble des dispositifs de projection 150, 160, chacun de ces dispositifs étant piqués sur le réseau hydraulique. On comprend que le fluide est disponible sur le réseau et que la sélection de l'alimentation est ainsi réalisée grâce à au moins une première vanne 151 associée au premier dispositif de projection 150 et au moins une deuxième vanne 161 associée au deuxième dispositif de projection 160. Selon un autre exemple de réalisation non illustré ici, le circuit de distribution 130 du fluide de nettoyage comprend des conduites indépendantes qui alimentent, indépendamment les uns des autres, chacun des dispositifs de projection. Selon l'un quelconque de ces modes de réalisation, le circuit de distribution 130 du fluide de nettoyage s'étend depuis le réservoir 110 qui contient ce fluide de nettoyage et permet l'alimentation de chacun des dispositifs de projection 150, 160 qui permettent de projeter du fluide de nettoyage sur les capteurs/émetteurs 200, 300.

Tel qu'évoqué ci-dessus, le réservoir 110 loge une pompe 120 électronisée. Cette pompe 120 électronisée comprend une unité de commande non représentée ici, qui comprend des moyens de communication permettant à cette pompe électronisée 120 d'échanger des informations et des instructions avec l'unité de contrôle 140. Alternativement, on pourra prévoir que l'unité de contrôle 140 et l'unité de commande forment une unique entité sans sortir du contexte de la présente invention.

Selon l'invention, lorsque l'un des capteurs/émetteurs 200, 300 nécessite un nettoyage, une information 210, 310 en ce sens est transmise à l'unité de contrôle 140 du système de nettoyage 100 selon l'invention. Selon l'exemple illustré sur la figure 1, cette information 210, 310 est transmise directement par le capteur/émetteur qui a besoin du nettoyage mais il est entendu que cette information 210, 310 pourrait être transmise par un autre appareil sans sortir du contexte de la présente invention. Par exemple, les images captées par le capteur/émetteur 200, 300 sont analysées par un module de traitement d'image pour élaborer le cas échéant une stratégie d'assistance à la conduite et ce module de traitement peut estimer qu'un nettoyage de l'un et/ou l'autre des capteurs/émetteurs est nécessaire et peut envoyer l'information 210, 230 à l'unité de contrôle.

L'unité de contrôle 140 qui reçoit cette information 210, 310 détermine alors quelle portion du circuit 130 doit être alimentée en fluide de nettoyage et détermine ainsi une longueur de cette portion du circuit. Cette longueur du circuit reflète en pratique le niveau de perte de charges que subit le fluide de nettoyage au cours de son transport depuis le réservoir 110 jusqu'aux dispositifs de projection 150, 160. Plus précisément, l'unité de contrôle 140 est implémentée avec des courbes de pertes de charge qui associent, pour chaque portion du circuit de distribution 130, une perte de charge donnée, cette perte de charge étant proportionnelle à la longueur de la portion du circuit de distribution concernée.

Afin d'assurer un nettoyage optimal des capteurs/émetteurs 200, 300 concernés, il convient d'assurer une pression P1 minimale de projection du fluide au niveau des premier et/ou deuxième dispositif(s) de projection 150, 160. L'unité de contrôle 140 est ici paramétrée avec les pressions théoriques souhaitées pour la projection de fluide dans chacun des dispositifs de projection, la pression théorique étant ici la même pour chacun des dispositifs de projection et sensiblement égale à 3 bars.

Tel que cela sera plus amplement détaillé ci-après, l'unité de contrôle 140 selon l'invention est configurée pour déterminer au moins un paramètre théorique de fonctionnement de la pompe 120, en fonction d'une part de la pression P1 minimale que l'on souhaite obtenir au niveau des premier et/ou deuxième dispositif(s) de projection 150, 160 et d'autre part en fonction de la longueur de la portion du circuit de distribution 130 concernée, c'est-à-dire plus précisément en fonction de la perte de charge subie par le fluide de nettoyage entre le réservoir 110 et le dispositif de projection 150, 160 concerné.

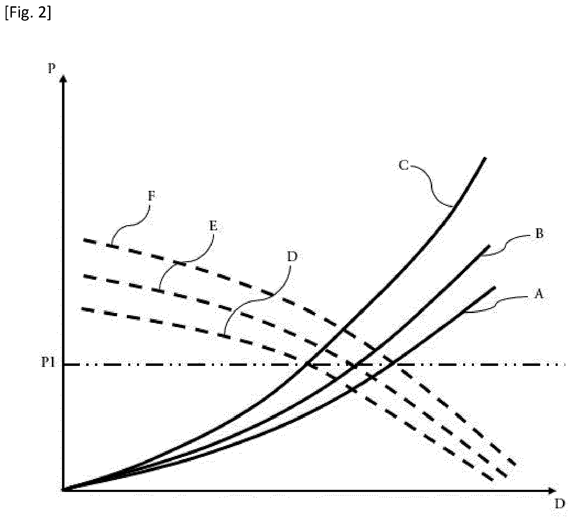

Par exemple, l'au moins un paramètre théorique de fonctionnement de la pompe 120 est une vitesse de rotation de cette pompe 120. Afin de permettre à l'unité de contrôle 140 de déterminer ce paramètre de fonctionnement théorique de fonctionnement de la pompe 120, des courbes de valeurs théoriques du paramètre de fonctionnement de la pompe 120 sont préenregistrées dans l'unité de contrôle 140. Un exemple de ces courbes est par exemple illustré sur la figure 2.

Tel que précédemment évoqué, l'unité de contrôle 140 comprend des moyens de communication qui lui permettent de communiquer avec l'unité de commande de la pompe électronisée. De tels moyens de communication permettent une communication entre l'unité de contrôle 140 qui est implémentée avec les courbes de perte de charge correspondant à chacune des portions du circuit de distribution, tel qu'évoqué ci-dessus, et la pompe 120 électronisée qui est quant à elle implémentée avec les caractéristiques des premier et deuxième dispositifs de projection 150, 160. Ces caractéristiques comprennent par exemple des valeurs de pression de fonctionnement de ces dispositifs de projection 150, 160. Avantageusement, cela permet de standardiser ces éléments, c'est-à-dire de standardiser l'unité de contrôle 140 et la pompe 120 électronisée, sans qu'il ne soit nécessaire de les programmer pour chaque nouvelle implantation sur un véhicule donné, c'est-à-dire sans qu'il ne soit nécessaire d'enregistrer manuellement les paramètres de fonctionnement de la pompe ou les caractéristiques des dispositifs de projection dans l'unité de contrôle 140 du système de nettoyage 100, ni d'enregistrer manuellement les courbes de perte de charge des différentes portions du circuit de distribution 130 dans l'unité de commande de la pompe électronisée 120.

La figure 2 représente ainsi un graphique dont l'abscisse représente un débit D du fluide de nettoyage et dont l'ordonnée représente une pression P au niveau des dispositifs de projection 150, 160. Sur ce graphique sont représentées trois courbes A, B, C en traits pleins qui représentent la perte de charge subie par le fluide de nettoyage, en fonction du dispositif de projection qu'il alimente, c'est-à-dire en fonction de la longueur de la portion du circuit de distribution que le fluide de nettoyage est amené à parcourir depuis le réservoir et en fonction du nombre de dispositif(s) de projection à alimenter.

Ces courbes A, B, C sont par exemple être obtenues grâce à des tests de calibration réalisés sur le véhicule auquel est destiné le système de nettoyage selon l'invention. Alternativement, ces courbes A, B, C sont avantageusement obtenues par des valeurs données par les fournisseurs de la pompe électronisée et des dispositifs de projection.

Ainsi, la courbe A représente la perte de charges du fluide de nettoyage lorsque le premier capteur/émetteur nécessite un nettoyage et que seul le premier dispositif de projection est mis en fonctionnement, la courbe B représente la perte de charges du fluide de nettoyage lorsque le deuxième capteur/émetteur nécessite un nettoyage et que seul le deuxième dispositif de projection est mis en fonctionnement et la courbe C représente quant à elle la perte de charges du fluide de nettoyage lorsque le premier et le deuxième capteurs/émetteurs nécessitent un nettoyage simultanément et que le premier et le deuxième dispositifs de projection sont tous deux mis en fonctionnement. Selon l'exemple de réalisation de la présente invention illustré ici, ces courbes de perte de charges sont implémentées dans l'unité de contrôle du système de nettoyage.

On note également que trois courbes D, E, F en traits pointillés sont également représentées sur ce graphique. Ces trois courbes D, E, F représentent quant à elle trois profils de vitesse de rotation de la pompe électronisée. Ainsi, la courbe D représente un fonctionnement de la pompe électronisée à basse vitesse de rotation, la courbe E représente un fonctionnement de la pompe électronisée à moyenne vitesse de rotation et la courbe F représente un fonctionnement de la pompe électronisée à grand vitesse. Selon l'exemple de réalisation de la présente invention illustré ici, ces courbes D, E, F sont implémentées dans l'unité de commande de la pompe électronisée du système de nettoyage.

Ainsi, à partir du graphique illustré sur la figure 2, l'unité de contrôle sélectionne, dans un premier temps, l'une des trois courbes A, B ou C, de pertes de charge en fonction de la portion du circuit de distribution à alimenter. Une fois cette courbe sélectionnée, l'unité de contrôle en déduit un couple de valeurs, c'est-à-dire quel débit correspond à la valeur de la pression P1 souhaitée au niveau des dispositifs de projection, et cherche ensuite dans les abaques des courbes D, E, F de fonctionnement de la pompe quelle est celle qui permet d'associer ce couple de valeurs.

Ainsi, par exemple, si une demande de nettoyage est formulée simultanément par le premier capteur/émetteur et par le deuxième capteur/émetteur, et que l'on souhaite alimenter le premier dispositif de projection et le deuxième dispositif de projection avec une pression P1, l'unité de contrôle lit sur le graphique qu'il convient de mettre la pompe électronisée en fonctionnement à basse vitesse, c'est-à-dire selon la courbe D, car c'est au niveau de cette courbe D que passe la courbe de perte de charge correspondant à la portion du circuit à alimenter, c'est-à-dire la courbe C, pour la pression P1. En conséquence, l'unité de contrôle détermine quelle alimentation électrique est théoriquement nécessaire à la pompe électronisée pour atteindre cette basse vitesse et ainsi assurer la pression P1 requise au niveau des dispositifs de projection.

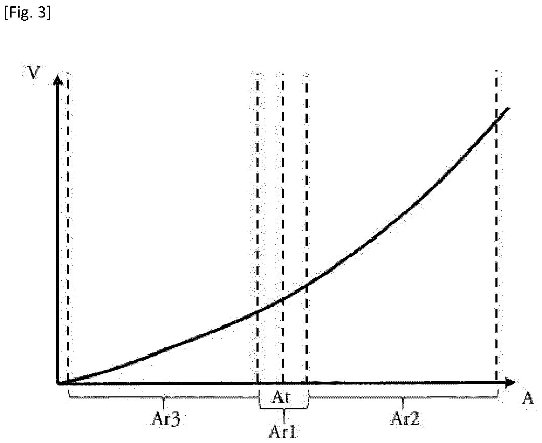

L'unité de contrôle met alors en fonctionnement la pompe électronisée à la vitesse souhaitée et mesure la valeur réelle de l'alimentation électrique de la pompe, c'est-à-dire que l'unité de contrôle mesure alors la valeur de l'alimentation électrique réellement nécessaire au fonctionnement de la pompe électronisée à la vitesse souhaitée. L'unité de contrôle peut ainsi comparer la valeur théorique de l'alimentation électrique de la pompe à la valeur réelle mesurée grâce à une autre courbe implémentée dans l'unité de commande de la pompe électronisée et illustrée sur la figure 3. Cette figure 3 représente ainsi la vitesse V de rotation de la pompe électronisée en fonction de l'alimentation électrique A qui lui est fournie. Si la valeur théorique At est égale à la valeur réelle Ar1, alors le circuit de distribution, et plus particulièrement la portion concernée du circuit de distribution, est en bon état. En revanche, si la valeur théorique At est inférieure à la valeur réelle Ar2, alors la portion concernée du circuit de distribution est obstruée entre le réservoir et le dispositif de projection le plus éloigné du réservoir, c'est-à-dire le deuxième dispositif de projection selon l'exemple illustré sur la figure 1. A contrario, si la valeur théorique At est supérieure à la valeur réelle Ar3, alors la portion concernée du circuit de distribution présente une fuite entre le réservoir et le dispositif de projection le plus éloigné du réservoir, c'est-à-dire le deuxième dispositif de projection selon l'exemple illustré sur la figure 1. Il convient également de déterminer une marge d'erreur acceptable. Selon un exemple de l'invention décrit ici, on considère qu'un écart-type inférieur à 5% n'est pas significatif.

L'unité de contrôle peut alors être configurée pour envoyer un signal prévenant le/les usager(s) du véhicule sur lequel est intégré un tel système de nettoyage, qu'un souci est détecté sur le circuit de distribution. On pourra également prévoir que le signal soit plus ou moins alarmant, par exemple avec une gradation de couleurs, en fonction de l'écart mesurée entre valeur réelle et valeur théorique.

On comprend de ce qui précède que l'unité de contrôle 140 permet de détecter une fuite ou une obstruction sur le circuit de distribution entre le réservoir et le dernier dispositif de projection alimenté, c'est-à-dire le dispositif de projection le plus éloigné du réservoir, mais qu'elle ne permet pas de localiser précisément cette fuite ou cette obstruction du circuit de distribution. Il peut ainsi notamment persister une incertitude quant à la localisation de la fuite ou de l'obstruction détectée lorsque les dispositifs de projection sont piqués sur un réseau hydraulique, tel que cela est par exemple illustré sur la figure 1. Facultativement, lorsqu'il persiste une telle incertitude sur la portion du circuit endommagée, l'unité de contrôle peut être configurée pour réaliser une nouvelle opération en ne mettant en fonctionnement que l'un des dispositifs de projection afin de mieux cibler la fuite ou l'obstruction détectée et ainsi permettre une réparation plus rapide. Ainsi, selon l'exemple illustré ici, l'unité de contrôle sera par exemple apte à déterminer si la fuite ou l'obstruction est située entre le réservoir et le premier dispositif de projection ou entre le premier dispositif de projection et le deuxième dispositif de projection.

Bien sûr, l'invention n'est pas limitée aux exemples qui viennent d'être décrit et de nombreux aménagements peuvent être apportés à cet exemple sans sortir du cadre de l'invention. Par exemple, le système de nettoyage selon l'invention peut comprendre plus de deux dispositifs de projection, ou le paramètre de fonctionnement de la pompe peut être différent de celui décrit sans sortir du contexte de la présente invention à condition que ce paramètre de fonctionnement permette de déterminer un état du circuit de distribution à un instant donné.

## Revendications

1. Système de nettoyage (100) d'au moins deux capteurs/émetteurs (200, 300) d'un véhicule automobile, le système (100) comprenant au moins un premier dispositif de projection (150) d'un fluide de nettoyage sur au moins un premier capteur/émetteur (200), au moins un deuxième dispositif de projection (160) d'un fluide de nettoyage sur au moins un deuxième capteur/émetteur (300), au moins un réservoir (110) de stockage du fluide de nettoyage, au moins un circuit de distribution (130) du fluide de nettoyage reliant le réservoir (110) au premier et au deuxième dispositifs de projection (150, 160) du fluide de nettoyage, au moins une pompe (120) électronisée et au moins une unité de contrôle (140), **caractérisé en ce que** l'unité de contrôle (140) est configurée pour recevoir une information (210, 310) de demande d'activation du premier et/ou du deuxième dispositifs de projection (150, 160) du fluide de nettoyage, pour déterminer une valeur théorique d'au moins un paramètre de fonctionnement de la pompe (120) en fonction, d'une part, d'une longueur d'une portion du circuit de distribution (130) s'étendant entre le réservoir (110) et le premier et/ou le deuxième dispositifs de projection (150, 160) du fluide de nettoyage à activer, et d'autre part, d'une pression (P1) de fonctionnement souhaitée du premier et/ou du deuxième dispositif(s) de projection (150, 160), pour comparer la valeur théorique du paramètre de fonctionnement de la pompe (120) avec une valeur réelle du paramètre de fonctionnement de la pompe (120) et pour déterminer un état de ladite portion du circuit de distribution (130) du fluide de nettoyage en fonction du résultat de ladite comparaison.

2. Système de nettoyage (100) selon la revendication précédente, dans lequel l'unité de contrôle (140) est configurée pour déterminer une information de fuite sur la portion du circuit de distribution (130) du fluide de nettoyage si la valeur réelle du paramètre de fonctionnement de la pompe (120) est inférieure à la valeur théorique du paramètre de fonctionnement de la pompe (120) et si l'écart entre la valeur réelle et la valeur théorique du paramètre de fonctionnement est supérieur ou égal à 5% de la valeur théorique du paramètre de fonctionnement de la pompe (120).

3. Système de nettoyage (100) selon l'une quelconque des revendications précédentes, dans lequel l'unité de contrôle (140) est configurée pour déterminer une information d'obstruction de la portion du circuit de distribution (130) du fluide de nettoyage si la valeur réelle du paramètre de fonctionnement de la pompe (120) est supérieure à la valeur théorique du paramètre de fonctionnement de la pompe (120) et si l'écart entre la valeur réelle et la valeur théorique du paramètre de fonctionnement est supérieur ou égal à 5% de la valeur théorique du paramètre de fonctionnement de la pompe (120).

4. Système de nettoyage (100) selon l'une quelconque des revendications précédentes, dans lequel le paramètre de fonctionnement de la pompe (120) est une vitesse (V) de rotation de cette pompe (120) ou une alimentation électrique (A) de cette pompe (120).

5. Système de nettoyage (100) selon l'une quelconque des revendications précédentes, dans lequel l'unité de contrôle (140) et la pompe (120) sont deux éléments distincts.

6. Procédé de mise en oeuvre d'un système de nettoyage (100) selon l'une quelconque des revendications précédentes, comprenant une étape au cours de laquelle l'unité de contrôle (140) reçoit une information (210, 310) concernant une demande de projection de fluide de nettoyage, à une pression (P1) donnée, par le premier et/ou le deuxième dispositif(s) de projection (150, 160) de fluide de nettoyage, une étape au cours de laquelle l'unité de contrôle (140) sélectionne, parmi une pluralité de courbes (A, B, C) de pertes de charge, la courbe correspondant à la portion du circuit de distribution (130) s'étendant entre le réservoir (110) et le premier et/ou le deuxième dispositif de projection (160) du fluide de nettoyage à activer et une étape au cours de laquelle l'unité de contrôle (140) sélectionne une courbe (D, E, F) de fonctionnement de la pompe (120) qui permet l'obtention d'une pression (P1) déterminée, en fonction de la courbe de pertes de charge précédemment sélectionnée et comprenant une étape au cours de laquelle l'unité de contrôle (140) détermine une alimentation électrique théorique (At) de la pompe (120) correspondant à la courbe (D, E, F) de fonctionnement sélectionnée, une étape au cours de laquelle l'unité de contrôle (140) mesure l'alimentation électrique (Arl, Ar2, Ar3) réellement fournie à la pompe (120) pour atteindre la courbe (D, E, F) de fonctionnement sélectionnée, une étape au cours de laquelle l'unité de contrôle (140) compare l'alimentation électrique théorique (At) de la pompe (120) avec l'alimentation électrique (Arl, Ar2, Ar3) réellement fournie à la pompe (120) et une étape au cours de laquelle l'unité de contrôle (140) détermine un état de la portion du circuit de distribution (130) en fonction de la comparaison réalisée entre l'alimentation électrique théorique (At) de la pompe (120) et l'alimentation électrique réelle (Arl, Ar2, Ar3) de cette pompe (120).

7. Procédé selon la revendication précédente, comprenant une étape au cours de laquelle l'unité de contrôle (140) détermine une information de fuite sur la portion du circuit de distribution (130) du fluide de nettoyage lorsqu'une valeur de l'alimentation électrique réelle (Ar3) de la pompe (120) est inférieure à une valeur de l'alimentation électrique théorique (At) de la pompe (120).

8. Procédé selon l'une quelconque des revendications 6 ou 7, comprenant une étape au cours de laquelle l'unité de contrôle (140) détermine une information d'obstruction du circuit de distribution (130) de fluide de nettoyage lorsqu'une valeur de l'alimentation électrique réelle (Ar2) de la pompe (120) est supérieure à une valeur de l'alimentation électrique théorique (At) de la pompe (120).

9. Véhicule automobile, comprenant au moins un système de nettoyage (100) selon l'une quelconque des revendications 1 à 5 et une pluralité de capteurs/émetteurs (200, 300), dans lequel au moins un dispositif de projection (150, 160) de fluide de nettoyage est associé à chaque capteur/émetteur (200, 300), dans lequel un circuit de distribution (130) du fluide de nettoyage relie le réservoir (110) de fluide de nettoyage à l'ensemble des dispositifs de projection (150, 160) de ce fluide de nettoyage et dans lequel une longueur du circuit de distribution (130) du fluide de nettoyage mesurée entre le réservoir (110) de fluide de nettoyage et l'un quelconque des dispositifs de projection (150, 160) du fluide de nettoyage est différente d'une longueur du circuit de distribution (130) du fluide de nettoyage mesurée entre le réservoir (110) de fluide de nettoyage et un autre dispositif de projection (150, 160) du fluide de nettoyage.

## Patentansprüche

1. Reinigungssystem (100) von mindestens zwei Sensoren/Sendern (200, 300) eines Kraftfahrzeugs, wobei das System (100) mindestens eine erste Spritzvorrichtung (150) einer Reinigungsflüssigkeit auf mindestens einen ersten Sensor/Sender (200), mindestens eine zweite Spritzvorrichtung (160) einer Reinigungsflüssigkeit auf mindestens einen zweiten Sensor/Sender (300), mindestens einen Speicherbehälter (110) der Reinigungsflüssigkeit, mindestens eine Verteilungsleitung (130) der Reinigungsflüssigkeit, die den Behälter (110) mit den ersten und zweiten Spritzvorrichtungen (150, 160) der Reinigungsflüssigkeit verbindet, mindestens eine elektronisierte Pumpe (120) und mindestens eine Steuereinheit (140) enthält, **dadurch gekennzeichnet, dass** die Steuereinheit (140) konfiguriert ist, eine Information (210, 310) einer Aktivierungsanforderung der ersten und/oder der zweiten Spritzvorrichtungen (150, 160) der Reinigungsflüssigkeit zu empfangen, um einen theoretischen Wert mindestens eines Betriebsparameters der arbeitenden Pumpe (120), einerseits abhängig von einer Länge eines Abschnitts der Verteilungsleitung (130), der sich zwischen dem Behälter (110) und den zu aktivierenden ersten und/oder den zweiten Spritzvorrichtungen (150, 160) der Reinigungsflüssigkeit erstreckt, und andererseits abhängig von einem gewünschten Betriebsdruck (P1) der ersten und/oder der zweiten Spritzvorrichtung(en) (150, 160) zu bestimmen, um den theoretischen Wert des Betriebsparameters der Pumpe (120) mit einem realen Wert des Betriebsparameters der Pumpe (120) zu vergleichen und um einen Zustand des Abschnitts der Verteilungsleitung (130) der Reinigungsflüssigkeit abhängig vom Ergebnis des Vergleichs zu bestimmen.

2. Reinigungssystem (100) nach dem vorhergehenden Anspruch, wobei die Steuereinheit (140) konfiguriert ist, eine Leckage-Information in dem Abschnitt der Verteilungsleitung (130) der Reinigungsflüssigkeit zu bestimmen, wenn der reale Wert des Betriebsparameters der Pumpe (120) niedriger ist als der theoretische Wert des Betriebsparameters der Pumpe (120), und wenn die Abweichung zwischen dem realen Wert und dem theoretischen Wert des Betriebsparameters höher als oder gleich 5% des theoretischen Werts des Betriebsparameters der Pumpe (120) ist.

3. Reinigungssystem (100) nach einem der vorhergehenden Ansprüche, wobei die Steuereinheit (140) konfiguriert ist, eine Verstopfungsinformation des Abschnitts der Verteilungsleitung (130) der Reinigungsflüssigkeit zu bestimmen, wenn der reale Wert des Betriebsparameters der Pumpe (120) höher ist als der theoretische Wert des Betriebsparameters der Pumpe (120), und wenn die Abweichung zwischen dem realen Wert und dem theoretischen Wert des Betriebsparameters höher als oder gleich 5% des theoretischen Werts des Betriebsparameters der Pumpe (120) ist.

4. Reinigungssystem (100) nach einem der vorhergehenden Ansprüche, wobei der Betriebsparameter der Pumpe (120) eine Rotationsgeschwindigkeit (V) dieser Pumpe (120) oder eine Stromversorgung (A) dieser Pumpe (120) ist.

5. Reinigungssystem (100) nach einem der vorhergehenden Ansprüche, wobei die Steuereinheit (140) und die Pumpe (120) zwei unterschiedliche Elemente sind.

6. Verfahren zur Anwendung eines Reinigungssystems (100) nach einem der vorhergehenden Ansprüche, das einen Schritt, während dessen die Steuereinheit (140) eine Information (210, 310) empfängt, die eine Spritzanforderung von Reinigungsflüssigkeit mit einem gegebenen Druck (P1) durch die erste und/oder die zweite Spritzvorrichtung(en) (150, 160) von Reinigungsflüssigkeit betrifft, einen Schritt, während dessen die Steuereinheit (140) unter einer Vielzahl von Kurven (A, B, C) von Druckabfällen die Kurve auswählt, die dem Abschnitt der Verteilungsleitung (130) entspricht, der sich zwischen dem Behälter (110) und der ersten und/oder zweiten zu aktivierenden Spritzvorrichtung (160) der Reinigungsflüssigkeit erstreckt, und einen Schritt, während dessen die Steuereinheit (140) eine Betriebskurve (D, E, F) der Pumpe (120) auswählt, die den Erhalt eines bestimmten Drucks (P1) erlaubt, abhängig von der vorher ausgewählten Kurve von Druckabfällen, und einen Schritt, während dessen die Steuereinheit (140) eine theoretische Stromversorgung (At) der Pumpe (120) entsprechend der ausgewählten Betriebskurve (D, E, F) bestimmt, einen Schritt, während dessen die Steuereinheit (140) die tatsächlich an die Pumpe (120) gelieferte Stromversorgung (Arl, Ar2, Ar3) misst, um die ausgewählte Betriebskurve (D, E, F) zu erreichen, einen Schritt, während dessen die Steuereinheit (140) die theoretische Stromversorgung (At) der Pumpe (120) mit der tatsächlich an die Pumpe (120) gelieferten Stromversorgung (Arl, Ar2, Ar3) vergleicht, und einen Schritt enthält, während dessen die Steuereinheit (140) einen Zustand des Abschnitts der Verteilungsleitung (130) abhängig vom durchgeführten Vergleich zwischen der theoretischen Stromversorgung (At) der Pumpe (120) und der realen Stromversorgung (Arl, Ar2, Ar3) dieser Pumpe (120) bestimmt.

7. Verfahren nach dem vorhergehenden Anspruch, das einen Schritt enthält, während dessen die Steuereinheit (140) eine Leckage-Information auf dem Abschnitt der Verteilungsleitung (130) der Reinigungsflüssigkeit bestimmt, wenn ein realer Wert der Stromversorgung (Ar3) der Pumpe (120) niedriger ist als ein theoretischer Wert der Stromversorgung (At) der Pumpe (120).

8. Verfahren nach einem der Ansprüche 6 oder 7, das einen Schritt enthält, während dessen die Steuereinheit (140) eine Verstopfungsinformation der Verteilungsleitung (130) von Reinigungsflüssigkeit bestimmt, wenn ein realer Wert der Stromversorgung (Ar2) der Pumpe (120) höher ist als ein theoretischer Wert der Stromversorgung (At) der Pumpe (120).

9. Kraftfahrzeug, das mindestens ein Reinigungssystem (100) nach einem der Ansprüche 1 bis 5 und eine Vielzahl von Sensoren/Sendern (200, 300) enthält, wobei mindestens eine Spritzvorrichtung (150, 160) von Reinigungsflüssigkeit jedem Sensor/Sender (200, 300) zugeordnet ist, wobei eine Verteilungsleitung (130) der Reinigungsflüssigkeit den Behälter (110) von Reinigungsflüssigkeit mit der Einheit von Spritzvorrichtungen (150, 160) dieser Reinigungsflüssigkeit verbindet, und wobei eine Länge der Verteilungsleitung (130) der Reinigungsflüssigkeit, gemessen zwischen dem Behälter (110) von Reinigungsflüssigkeit und einer der Spritzvorrichtungen (150, 160) der Reinigungsflüssigkeit, sich von einer Länge der Verteilungsleitung (130) der Reinigungsflüssigkeit gemessen zwischen dem Behälter (110) von Reinigungsflüssigkeit und einer anderen Spritzvorrichtung (150, 160) der Reinigungsflüssigkeit unterscheidet.

## Claims

1. A system (100) for cleaning at least two sensors/transmitters (200, 300) for a motor vehicle, the system (100) comprising at least one first device (140) for projecting a cleaning fluid onto at least one first sensor/transmitter (200), at least one second device (160) for projecting a cleaning fluid onto at least one second sensor/transmitter (300), at least one reservoir (110) for storage of the cleaning fluid, at least one circuit (130) for distribution of the cleaning fluid, connecting the reservoir (110) to the first and second cleaning fluid projection devices (150, 160), at least one electronic pump (120), and at least one control unit (140), **characterized in that** the control unit (140) is configured to receive information (210, 310) on a request for activation of the first and/or second device(s) (150, 160) for projection of the cleaning fluid, in order to determine a theoretical value of at least one operating parameter of the pump (120) as a function of firstly a length of a portion of the distribution circuit (130) extending between the reservoir (110) and the first and/or second cleaning fluid projection device(s) (150, 160) to be activated, and secondly a desired operating pressure (P1) of the first and/or second projection device(s) (150, 160), in order to compare the theoretical value of the operating parameter of the pump (120) with an actual value of the operating parameter of the pump (120) and in order to determine a state of said portion of the cleaning fluid distribution circuit (130) as a function of the result of said comparison.

2. The cleaning system (100) as claimed in the preceding claim, wherein the control unit (140) is configured for determining information on a leak in the portion of the cleaning fluid distribution circuit (130) if the actual value of the operating parameter of the pump (120) is less than the theoretical value of the operating parameter of the pump (120), and if the difference between the actual value and the theoretical value of the operating parameter is greater than or equal to 5% of the theoretical value of the operating parameter of the pump (120).

3. The cleaning system (100) as claimed in one of the preceding claims, wherein the control unit (140) is configured for determining information on an obstruction in the portion of the cleaning fluid distribution circuit (130) if the actual value of the operating parameter of the pump (120) is greater than the theoretical value of the operating parameter of the pump (120), and if the difference between the actual value and the theoretical value of the operating parameter is greater than or equal to 5% of the theoretical value of the operating parameter of the pump (120).

4. The cleaning system (100) as claimed in any of the preceding claims, wherein the operating parameter of the pump (120) is a rotation speed (V) of said pump (120) or an electrical supply (A) of said pump (120).

5. The cleaning system (100) as claimed in any of the preceding claims, wherein the control unit (140) and the pump (120) are two separate elements.

6. A method for implementing a cleaning system (100) as claimed in any of the preceding claims, comprising a step during which the control unit (140) receives information (210, 310) concerning a request for projection of cleaning fluid at a given pressure (P1) by the first and/or the second cleaning fluid projection device(s) (150, 160), a step during which the control unit (140) selects, from a plurality of load loss curves (A, B, C), the curve corresponding to the portion of the distribution circuit (130) extending between the reservoir (110) and the first and/or second cleaning fluid distribution device(s) (160) to be activated, and a step during which the control unit (140) selects an operating curve (D, E, F) of the pump (120) which allows the obtaining of a determined pressure (P1) as a function of the load loss curve previously selected and comprising a step during which the control unit (140) determines a theoretical electrical supply (At) of the pump (120) corresponding to the selected operating curve (D, E, F), a step during which the control unit (140) measures the electrical supply (Arl, A42, Ar3) actually supplied to the pump (120) in order to achieve the selected operating curve (D, E, F), a step during which the control unit (140) compares the theoretical electrical supply (At) of the pump (120) with the electrical supply (Arl, Ar2, Ar3) actually supplied to the pump (120), and a step during which the control unit (140) determines a state of the portion of the distribution circuit (130) as a function of the comparison made between the theoretical electrical supply (At) of the pump (120) and the actual electrical supply (Arl, Ar2, Ar3) of said pump (120).

7. The method as claimed in the preceding claim, comprising a step during which the control unit (140) determines information on a leak in a portion of the cleaning fluid distribution circuit (130) when a value of the actual electrical supply (Ar3) of the pump (120) is less than a value of the theoretical electrical supply (At) of the pump (120).

8. The method as claimed in one of claims 6 or 7, comprising a step during which the control unit (140) determines information on an obstruction in the cleaning fluid distribution circuit (130) when a value of the actual electrical supply (Ar2) of the pump (120) is greater than a value of the theoretical electrical supply (At) of the pump (120).

9. A motor vehicle comprising at least one cleaning system (100) as claimed in any of claims 1 to 5 and a plurality of sensors/transmitters (200, 300), wherein at least one cleaning fluid projection device (150, 160) is associated with each sensor/transmitter (200, 300), wherein a cleaning fluid distribution circuit (130) connects the cleaning fluid reservoir (110) to all the devices (150, 160) for projecting said cleaning fluid, and wherein a length of the cleaning fluid distribution circuit (130) measured between the cleaning fluid reservoir (110) and any of the cleaning fluid projection devices (150, 160) is different from a length of the cleaning fluid distribution circuit (130) measured between the cleaning fluid reservoir (110) and another cleaning fluid projection device (150, 160).
